# EUROPÄISCHE PATENTSCHRIFT

(11) **EP 3 382 944 B1**
(45) Veröffentlichungstag und Bekanntmachung des Hinweises auf die Patenterteilung: **21.08.2019**
(21) Anmeldenummer: 17164077.4
(22) Anmeldetag: 31.03.2017
(51) Int. Cl.: H04L 12/26

(54) **VERFAHREN UND KOMMUNIKATIONSSYSTEM ZUM ZENTRALEN ERMITTELN EINES ZUSTANDS EINES PAKETVERMITTELNDEN TELEKOMMUNIKATIONSNETZES**
METHOD AND COMMUNICATION SYSTEM FOR CENTRALLY DETERMINING A STATE OF A PACKET SWITCHING TELECOMMUNICATION NETWORK
PROCÉDÉ ET SYSTÈME DE COMMUNICATION DE DÉTERMINATION CENTRALE D'UN ÉTAT D'UN RÉSEAU DE TÉLÉCOMMUNICATION PAR COMMUTATION DE PAQUETS

(43) Veröffentlichungstag der Anmeldung: 03.10.2018
(73) Patentinhaber: Deutsche Telekom AG, 53113 Bonn (DE)
(72) Erfinder: GEIB, Rüdiger, 64297 Darmstadt (DE)
(74) Vertreter: Blumbach · Zinngrebe Patentanwälte PartG mbB

(56) Entgegenhaltungen:
- WO-A2-2012/110011
- DE-A1-102013 011 223
- GEIB R ET AL: "A Scalable and Topology-Aware MPLS Dataplane Monitoring System; draft-ietf-spring-oam-usecase-06.txt", A SCALABLE AND TOPOLOGY-AWARE MPLS DATAPLANE MONITORING SYSTEM; DRAFT-IETF-SPRING-OAM-USECASE-06.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 22. Februar 2017 (2017-02-22), Seiten 1-17, XP015118055, [gefunden am 2017-02-22]

## Beschreibung

Die Erfindung betrifft ein Verfahren und ein Kommunikationssystem zum zentralen Ermitteln eines Zustands eines paketvermittelnden Teilkommunikationsnetzes, insbesondere eines Segment Routing oder MPLS (Multiprotocol Label Switching)-Teilkommunikationsnetzes.

In einem paketvermittelnden Teilkommunikationsnetz, das auf den Protokollen OSPF (Open Shortest Path First) oder IS-IS (Intermediate System to Intermediate System Protocol) basiert, können die beteiligten Paketvermittlungsknoten mittels Hello-Informationspaketen selbst ihre Verbindungen zu benachbarten Paketvermittlungsknoten prüfen. Laufzeiten von Verbindungen zwischen den beteiligten Paketvermittlungsknoten können beispielsweise mit Messgeräten gemessen werden, die den Standard IP Performance Measurement (IPPM, RFC 2330) umsetzen. Anzumerken ist, dass die von einem Paketvermittlungsknoten verworfenen Pakete zwar in einem Messgerät registriert werden; jedoch kann die genaue Schnittstelle des Paketvermittlungsknotens, der die Pakete verworfen hat, nicht durch das Messgerät erkannt werden. Weiterhin können die Paketvermittlungsknoten die Summe der Informationspakete und die Summe der Länge der Informationspakete, die sie über eine direkte Verbindung zu einem anderen Paketvermittlungsknoten desselben Teilnetzes senden, messen. Auf Grundlage dieser Informationen können die Paketvermittlungsknoten selbst Entscheidungen zur Steuerung von Verkehrsströmen treffen, wenn zum Beispiel eine Verbindung ausgefallen ist oder die Paketverluste auf einer Verbindung so hoch sind, dass Informationspakete in einem Paketvermittlungsknoten unmittelbar vor dem Senden gespeichert oder verworfen werden müssen. Belastungen einer Verbindung mit Informationspaketen sowie von Paketvermittlungsknoten verursachte Paketverluste werden von den Paketvermittlungsknoten erfasst, die hierzu jeweils einen Zähler aufweisen. All diese Methoden erfordern jedoch interne Messvorgänge in den betroffenen Paketvermittlungsknoten. Zudem ist es erforderlich, dass bei Auftritt eines Fehlerfalls Meldungen des jeweiligen Paketvermittlungsknoten an andere Paketvermittlungsknoten des Teilkommunikationsnetzes und gegebenenfalls an Netz-Überwachungsdatenbanken übertragen werden.

Aus der DE 10 2013 011 223 A1 ist ein Verfahren zum Ermitteln von Ein-Wege-Performanzparametern, wie zum Beispiel einer Laufzeit, beim Übertragen eines Messpaketes in einem paketvermittelnden MPLS-Teilkommunikationsnetzes mit einer einzigen Messeinrichtung bekannt. Hierzu wird ein Messpaket auf einer Schleife, welche vordefinierte MPLS-Pfade aufweist, von einem Absender zu einem Ziel und zurück zum Absender übertragen, wobei das Messpaket eine Anzahl von Routern passiert.

Ein Verfahren zum Einrichtung einer Schleife in einem MPLS-Netzwerk, wobei die Schleife mehrere MPLS-Pfade aufweist, ist beispielsweise aus der WO 2012/110011A2 bekannt. Das Dokument "A Scalable and Topology-Aware MPLS Dataplane Monitoring System; draft-ietf-spring-oam-usecase-06.txt" IETF Internet-Draft (2017-02-22)beschreibt ein System mit MPLS-Datenebenenpfad Überwachungsfunktionen, wobei das zentralisierte MPLS-Überwachungssystem in der Lage ist,eine Kontinuitätsprüfung (Ping) entlang aller Label Switched Paths durchzuführen. Der Erfindung liegt die Aufgabe zugrunde, ein Verfahren und ein Kommunikationssystem zum zentralen Ermitteln eines Zustandes eines paketvermittelnden Teilkommunikationsnetzes zur Verfügung zu stellen, mit denen es möglich ist, zuverlässig, schnell und kostengünstig den aktuellen Zustand eines paketvermittelnden Teilkommunikationsnetzes zu ermitteln, ohne dass die Paketvermittlungsknoten des zu überwachenden Teilkommunikationsnetzes eigene Messungen vornehmen müssen.

Ein Kerngedanke der Erfindung beruht auf der Erkenntnis des Erfinders, nach der mittels einer zentralen Überwachung der Laufzeiten in einer minimalen Anzahl an Mess-Schleifen, die in einem paketvermittelnden Teilkommunikationsnetz bereitgestellt werden, unverwechselbare und charakteristische Laufzeitmuster ermittelt werden können, welche das eindeutige Erkennen des aktuellen Zustands bzw. eines Fehlerfalls, wie zum Beispiel einen Ausfall oder eine Überlastung einer bestimmten Verbindung innerhalb des Teilkommunikationsnetzes, ermöglichen. Es hat sich herausgestellt, dass bei einer gemeinsamen Auswertung der Laufzeiten in mindestens sechs Mess-Schleifen verschiedene Zustände bzw. Fehler innerhalb des paketvermittelnden Teilkommunikationsnetzes eindeutig erkannt werden können. Anzumerken ist noch, dass die zentrale Überwachung bzw. Messung von Laufzeiten in wenigstens sechs Mess-Schleifen des paketvermittelnden Teilkommunikationsnetzes in einer Überwachungseinrichtung, welche mit dem paketvermittelnden Teilkommunikationsnetzwerk verbunden ist, durchgeführt wird.

Das obengenannte technische Problem wird zum einen durch die Merkmale der Verfahrensschritte des Anspruchs 1 gelöst. Demnach wird ein Verfahren zum zentralen Überwachen eines Zustandes eines paketvermittelnden Teilkommunikationsnetzes zur Verfügung gestellt. Das paketvermittelnde Teilkommunikationsnetz weist mindestens sechs Verbindungen, die jeweils zwei Paketvermittlungsknoten unmittelbar miteinander verbinden, und eine wenigstens mit einer der Paketvermittlungsknoten verbundene Überwachungseinrichtung auf. Das Verfahren weist folgende Verfahrensschritte auf:
a) Bereitstellen von mindestens sechs verschiedenen Mess-Schleifen, die jeweils an der Überwachungseinrichtung beginnen und enden, derart, dass jede Mess-Schleife genau eine andere der mindestens sechs Verbindungen, die bidirektional von Überwachungspaketen durchlaufen wird, und wenigstens zwei weitere der wenigstens sechs Verbindungen, die jeweils unidirektional von Überwachungspaketen durchlaufen werden, aufweist;
b) Bereitstellen, von der Überwachungseinrichtung, für jede der mindestens sechs Mess-Schleifen wenigstens eines Überwachungspakets, das gezielt über die Verbindungen der jeweiligen Mess-Schleife übertragen wird;
c) Bestimmen, in der Überwachungseinrichtung, unter Ansprechen auf die in Schritt b) übertragenen Überwachungspakete einer Laufzeit in jeder der mindestens sechs Mess-Schleifen;
d) Ermitteln des Zustands des paketvermittelnden Teilkommunikationsnetzes in Abhängigkeit von den in Schritt c) bestimmten Laufzeiten.

Mit anderen Worten: In Schritt d) wird hinsichtlich der mindestens sechs Mess-Schleifen ein Laufzeit-Muster erzeugt, welches eindeutig den Zustand des paketvermittelnden Teilkommunikationsnetzes repräsentiert. Beispielsweise kann anhand des ermittelten Laufzeitmusters der Ausfall einer bestimmten Verbindung und/oder der Ausfall eines bestimmten Paketvermittlungsknoten erkannt werden.

Angemerkt sei, dass die mindestens sechs verschiedenen Mess-Schleifen in Schritt a) beispielsweise vorkonfiguriert oder beispielsweise unter Ausführung des MPLS-Verfahrens gemäß der WO 2012/110011 A2, welches einen Adressenstapel in jedem Überwachungspaket verwendet, bereitgestellt bzw. festgelegt werden können.

In zweckmäßiger Weise wird jede der mindestens sechs Verbindungen in genau einer der Mess-Schleifen bidirektional, in genau einer weiteren der Messschleifen unidirektional in einer ersten Richtung und in genau einer weiteren der Mess-Schleifen unidirektional in einer zweiten Richtung durchlaufen. Mit anderen Worten: Jede Verbindung ist vorzugsweise in genau drei verschiedenen Mess-Schleifen enthalten.

Gemäß einer vorteilhaften Weiterbildung weist Schritt c) folgende Schritte auf:
Speichern jeweils einer Referenzlaufzeit für jede der mindestens sechs Mess-Schleifen;
Vergleichen jeder in Schritt c) bestimmten Laufzeit mit der jeweiligen dazugehörenden Referenzlaufzeit zur Ermittlung einer Laufzeitänderung hinsichtlich jeder der mindestens sechs Mess-Schleifen, wobei in Schritt d) in Abhängigkeit von den ermittelten Laufzeitänderungen der Zustand des paketvermittelnden Teilkommunikationsnetzes ermittelt wird. Mit anderen Worten: Die für eine bestimmte Messschleife gemessene Laufzeit wird mit der dieser Mess-Schleife zugeordneten Referenzlaufzeit verglichen. Dieser Vergleich wird analog für jede Mess-Schleife durchgeführt, um für jede Mess-Schleife eine Laufzeitänderung zu ermitteln.

Angemerkt sei, dass die Referenzlaufzeiten im ungestörten Betrieb des paketvermittelnden Teilkommunikationsnetzes vorab ermittelt werden. Mit dem Ausdruck "im ungestörten Betrieb" wird insbesondere angedeutet, dass das paketvermittelnde Teilkommunikationsnetz ohne Überlast betrieben und von keinen Ausfällen verändert wird.

Unter dem Bereitstellen von mindestens sechs verschiedenen Mess-Schleifen wird beispielsweise verstanden, dass die Mess-Schleifen vorkonfiguriert werden oder unter Ausführung eines geeigneten Routingverfahrens, wie zum Beispiel MPLS, LDP (Label Distribution Proctocol) oder Segement Routing festgelegt werden können, wobei Überwachungspakete zum Durchlaufen jeder Mess-Schleife von der Überwachungseinrichtung mit entsprechenden Adressinformationen bereitgestellt werden können. Das Segment Routing ist beispielsweise in dem Dokument "Segment Routing Architecture draft-ietf-spring-segment-routing-11 beschrieben, welches unter dem Link https:/www.ietf.org/id/draft-ietf-spring-segment-routing-11.txt zu finden ist.

Neben den zum Durchlaufen einer entsprechenden Mess-Schleife erforderlichen Adressinformationen enthält jedes MPLS-Überwachungspaket vorzugsweise einen Zeitstempel zur Laufzeitmessung. Die Adressinformationen können beispielsweise einen Adressstapel enthalten, der die beteiligten Paketvermittlungsknoten adressiert. Vorteilhafterweise kann in Schritt d) ein Ausfall oder eine Überlastung einer bestimmten der mindestens sechs Verbindungen und/oder der Ausfall oder die Überlastung eines bestimmten der Paketvermittlungsknoten ermittelt werden. Insbesondere kann der Ausfall oder die Überlastung der mit einer der sechs Verbindungen verbundene Ausgangsschnittstelle eines bestimmten Paketvermittlungsknotens ermittelt werden.

An dieser Stelle sei erwähnt, dass es sich bei den Paketvermittlungsknoten um Kantenrouter (label edge router), Paketvermittlungsknoten einer Segement Routing Domäne oder Labelvermittlungsrouter (label switch router) handeln kann.

Das oben genannte technische Problem wird ebenfalls mit den Merkmalen des Anspruchs 6 gelöst.

Danach ist ein Kommunikationssystem zum zentralen Ermitteln eines Zustands eines paketvermittelnden Teilkommunikationsnetzes vorgesehen, welches folgende Merkmale aufweist:
- wenigstens ein paketvermittelndes Teilkommunikationsnetz, welches mindestens sechs Verbindungen, die jeweils zwei Paketvermittlungsknoten unmittelbar miteinander verbinden, aufweist, und
- eine wenigstens einer der Paketvermittlungsknoten zugeordnete Überwachungseinrichtung, die dazu ausgebildet ist,
   a) Überwachungspakete zur gezielten Übertragung über mindestens sechs Mess-Schleifen bereitzustellen, wobei jede der sechs verschiedenen Mess-Schleifen jeweils an der Überwachungseinrichtung beginnt und endet, und wobei jede der sechs verschiedenen Mess-Schleifen genau eine andere der mindestens sechs Verbindungen zum bidirektional Durchlaufen von Überwachungspaketen und wenigstens zwei weitere der wenigstens sechs Verbindungen zum jeweiligen unidirektionalen Durchlaufen von Überwachungspaketen aufweist,
   b) unter Ansprechen auf die übertragenen Überwachungspakete eine Laufzeit in jeder der mindestens sechs Mess-Schleifen zu bestimmen, und
   c) in Abhängigkeit von den in b) bestimmten Laufzeiten den Zustand des paketvermittelnden Teilkommunikationsnetzes zu ermitteln.

Zweckmäßigerweise ist das Kommunikationssystem dazu ausgebildet, die mindestens sechs Mess-Schleifen derart einzurichten, dass das Durchlaufen jeder der mindestens sechs Verbindungen in genau einer der Mess-Schleifen bidirektional, in genau einer weiteren der Messschleifen unidirektional in einer ersten Richtung und in genau einer weiteren der Mess-Schleifen unidirektional in einer zweiten Richtung erfolgt.

Vorteilhafterweise kann die Überwachungseinrichtung einen Speicher zum Ablegen jeweils einer Referenzlaufzeit für jede der mindestens sechs Mess-Schleifen aufweisen. In diesem Fall kann die Überwachungseinrichtung dazu ausgebildet sein, jede der in Merkmal b) bestimmten Laufzeit mit der jeweils dazugehörenden Referenzzeit zur Ermittlung einer Laufzeitänderung zu vergleichen und in Abhängigkeit von den ermittelten Laufzeitänderungen den Zustand des paketvermittelnden Teilkommunikationsnetzes zu ermitteln. Mit anderen Worten: Die für eine bestimmte Mess-Schleife gemessene Laufzeit wird mit der dieser Mess-Schleife zugeordneten Referenzlaufzeit verglichen. Dieser Vergleich wird analog für jede Mess-Schleife durchgeführt, um für jede Mess-Schleife eine Laufzeitänderung zu ermitteln.

Angemerkt sei an dieser Stelle, dass in Abhängigkeit von den ermittelten Laufzeitänderungen ein eindeutiges Verhaltens- bzw. Laufzeitänderungsmuster bezüglich des paketvermittelnden Teilkommunikationsnetzes erzeugt wird, anhand dessen der dazugehörende Zustand des paketvermittelnden Teilkommunikationsnetzes ermittelt werden kann. Die Referenzlaufzeiten werden in jeder der mindestens sechs Mess-Schleifen vorzugsweise im ungestörten Betrieb, d.h. insbesondere im überlastfreien Zustand des Teilkommunikationsnetzes gemessen.

Vorzugsweise ist die Überwachungseinrichtung dazu ausgebildet, die mindestens sechs Mess-Schleifen unter Ausführung eines an sich bekannten Segment Routing- oder MPLS-Routingverfahrens bereitzustellen bzw. festzulegen, wobei die Überwachungseinrichtung Segment Routing oder MPLS-Überwachungspakete für jede Mess-Schleife bereitstellen kann. Hierzu kann die Überwachungseinrichtung für jede Mess-Schleife wenigstens einem Überwachungspaket eine Adressinformation einschreiben, die beispielsweise die Paketvermittlungsknoten derjenigen Mess-Schleife adressiert, die von dem wenigstens einen Überwachungspaket durchlaufen werden soll.

In vorteilhafter Weise kann die Überwachungseinrichtung zum Ermitteln eines Ausfalls oder einer Überlastung einer vorbestimmten der mindestens sechs Verbindungen und/oder eines Ausfalls oder einer Überlastung eines bestimmten Paketvermittlungsknoten ausgebildet sein. Insbesondere kann der Ausfall oder die Überlastung der mit einer der sechs Verbindungen verbundene Ausgangsschnittstelle eines bestimmten Paketvermittlungsknotens ermittelt werden.

Dank des erfindungsgemäßen Verfahrens und des erfindungsgemäßen Kommunikationssystems ist es möglich, den Zustand eines paketvermittelnden Teilkommunikationsnetzes ohne interne Messvorgänge in den jeweiligen Paketvermittlungsknoten und ohne Übertragung von Fehlermeldungen der Paketvermittlungsknoten untereinander oder zu einer zentralen Einrichtung zu ermitteln.

Die Erfindung wird nachfolgend anhand einiger Ausführungsbeispiele in Verbindung mit den beiliegenden Zeichnungen näher erläutert. In den Figuren werden für gleiche Komponenten dieselben Bezugszeichen verwendet Die Zeichnungen zeigen:
- Figur 1: ein beispielhaftes Kommunikationssystem mit einem paketvermittelnden Teilkommunikationsnetz, an das eine Überwachungseinrichtung angeschlossen ist,
- Figur 2: ein alternatives Kommunikationssystem mit einem paketvermittelnden Teilkommunikationsnetz mit einer angeschlossenen Überwachungseinrichtung.

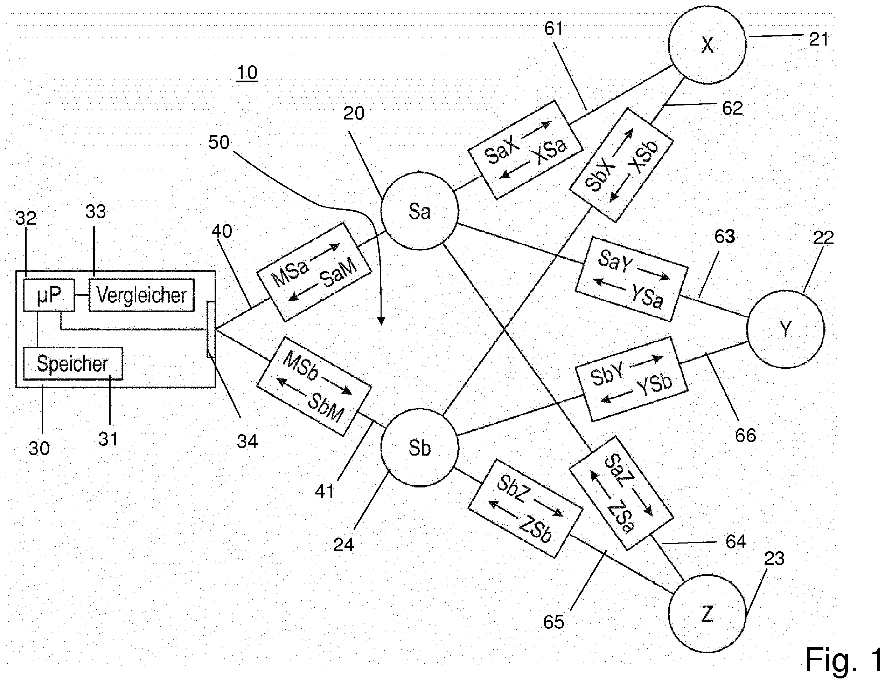

Figur 1 zeigt ein beispielhaftes IP-basiertes Kommunikationssystem 10, welches ein paketvermittelndes Teilkommunikationsnetz 50 mit beispielsweise fünf Paketvermittlungsknoten 20 bis 24 aufweist, die über mindestens sechs zu überwachende Verbindungen 61 bis 66 derart verbunden sind, dass jede Verbindung jeweils zwei Paketvermittlungsknoten unmittelbar miteinander verbindet. Bei den Paketvermittlungsknoten 20 bis 24 kann es sich um Kantenrouter (label edge router) oder Labelvermittlungsrouter (label switch router) eines MPLS- oder Segment Routing nutzenden Teilkommunikationsnetzes 50 handeln.

Im dargestellten Beispiel sind die beiden Paketvermittlungsknoten 20 und 21 über die Verbindung 61, die beiden Paketvermittlungsknoten 21 und 24 über die Verbindung 62, die beiden Paketvermittlungsknoten 20 und 22 über die Verbindung 63, die beiden Paketvermittlungsknoten 20 und 23 über die Verbindung 64, die beiden Paketvermittlungsknoten 23 und 24 über die Verbindung 65 und die beiden Paketvermittlungsknoten 22 und 24 über die Verbindung 66 direkt miteinander verbunden. Angemerkt sei, dass das Teilkommunikationsnetz 50 auch mehr oder weniger Paketvermittlungsknoten sowie mehr als sechs Verbindungen aufweisen kann; allerdings sind mindestens sechs Verbindungen zum zentralen Ermitteln eines Zustands des paketvermittelnden Teilkommunikationsnetzes 50 erforderlich.

Dem Teilkommunikationsnetz 50 ist eine Überwachungseinrichtung 30 zugeordnet, die an wenigstens einen der Paketvermittlungsknoten angeschlossen sein kann. Die Überwachungseinrichtung 30 kann, wie dargestellt, als ein einziges zentrales Gerät, welches insbesondere zum Empfangen, Senden und Auswerten von Überwachungspaketen ausgebildet ist, realisiert sein. In dem Ausführungsbeispiel gemäß Fig. 1 ist die Überwachungseinrichtung 30 an die beiden Paketvermittlungsknoten 20 und 24 angeschlossen. Beispielsweise ist die Überwachungseinrichtung 30 über eine Verbindung 40 mit dem Paketvermittlungsknoten 20 und über eine Verbindung 41 mit dem Paketvermittlungsknoten 24 verbunden. Alternativ könnte die Überwachungseinrichtung 30 auch in einem der Paketvermittlungsknoten 20 bis 24 implementiert sein. Alternativ könnte die Überwachungseinrichtung 30 auch eine zum Beispiel an den Paketvermittlungsknoten 20 angeschlossene Sendeeinrichtung zum Senden von Überwachungspaketen, insbesondere von Segment Routing- oder MPLS-Überwachungspaketen, und eine beispielsweise an den Paketvermittlungsknoten 24 angeschlossene Empfangseinrichtung zum Empfangen und Auswerten von Überwachungspakten aufweisen, wobei die Laufzeiten oder Laufzeitänderungen in den jeweiligen Mess-Schleifen dann in der Empfangseinrichtung bestimmt werden würden.

Jeder der Verbindungen 61 bis 66, 40 und 41 sind zwei Bezeichnungen zugeordnet, die die jeweilige Durchlaufrichtung der Verbindung anzeigen. Beispielsweise bedeutet die Bezeichnung SaX →, dass Datenpakete die Verbindung 61 vom Paketvermittlungsknoten 20 zum Paketvermittlungsknoten 21 durchlaufen, während die Bezeichnung XSa ← anzeigt, dass Datenpakete die Verbindung 61 vom Paketvermittlungsknoten 21 zum Paketvermittlungsknoten 20 durchlaufen.

Das in Figur 1 gezeigte Kommunikationssystem 10 kann auch mehrere paketvermittelnde Teilkommunikationsnetze aufweisen, denen jeweils eine Überwachungseinrichtung zugeordnet sein kann.

Um das paketvermittelnde Teilkommunikationssystem 50 zentral überwachen bzw. einen Zustand, vorzugsweise den aktuellen Zustand des paketvermittelnden Teilkommunikationsnetzes 50 zentral ermitteln zu können, ist es erforderlich, mindestens sechs verschiedene Mess-Schleifen, die jeweils an der Überwachungseinrichtung 30 beginnen und enden, derart bereitzustellen bzw. festzulegen, dass jede Mess-Schleife genau eine andere der mindestens sechs Verbindungen 61 bis 66, die bidirektional von Überwachungspaketen durchlaufen wird, und wenigstens zwei weitere der wenigstens sechs Verbindungen, die jeweils nur unidirektional von Überwachungspaketen durchlaufen werden, ausweist. Mit anderen Worten: Jede Mess-Schleife enthält mindestens drei verschiedene Verbindungen. Insbesondere zeichnen sich die mindestens sechs verschiedenen Mess-Schleifen jeweils dadurch aus, dass jede der mindestens sechs Verbindungen in genau einer der Mess-Schleifen bidirektional, in genau einer weiteren der Messschleifen unidirektional in einer ersten Richtung und in genau einer weiteren der Mess-Schleifen unidirektional in einer zweiten Richtung durchlaufen wird. Das bedeutet, dass jede der Verbindungen 61 bis 66 in genau drei verschiedenen Mess-Schleifen enthalten ist. Die Überwachungseinrichtung 30 ist dazu ausgebildet, Überwachungspakete derart zu adressieren, dass die mindestens sechs Mess-Schleifen entsprechend obiger Vorgabe durchlaufen werden können.

Die mindestens sechs Mess-Schleifen können beispielsweise vorkonfiguriert werden, indem die entsprechenden Verbindungen vorab beispielsweise mit einem LDP (Label Distribution Protocol)-Routingprotokoll aufgebaut werden. LDP ist ein bekanntes Signalisierungsprotokoll zum Aufbauen von Pfaden in einem MPLS-Netzwerk. Hierzu müssen die Paketvermittlungsknoten 20 bis 24 und die Überwachungseinrichtung 30 MPLS-fähig ausgebildet sein.

Ein Verfahren zum Bereitstellen bzw. Festlegen einer Schleife von MPLS-Pfaden ist beispielsweise aus der WO 2012/110011 A1 bekannt, welches in dieser Erfindung zum Bereitstellen der mindestens sechs Mess-Schleifen angewendet werden kann. Statt LDP kann auch das Segment Routing-Verfahren für MPLS- oder IPv6 basierte Teilkommunikationsnetze zum Einsatz kommen, welches beispielsweise unter der Web-Adresse https:/www.ietf.org/id/draft-ietf-spring-segment-routing-11.txt zu finden ist. Angemerkt sei, dass jedes Verfahren angewendet werden kann, mit dem mindestens sechs verschiedene Mess-Schleifen gemäß obiger Definition in einem Teilkommunikationsnetz bereitgestellt werden können.

Angenommen sei nunmehr, dass die folgenden sechs Mess-Schleifen unter Verwendung der Verbindungen 61 bis 66 in dem Teilkommunikationsnetz 50 bereitgestellt bzw. festgelegt werden:
1. Mess-Schleife: MSa → SaX → XSa → SaZ → ZSb → SbM
2. Mess-Schleife: MSa → SaZ → ZSa → SaY → YSb → SbM
3. Mess-Schleife: MSb → SbY → YSb → SbX → XSa → SaM
4. Mess-Schleife: MSb → SbX → XSb → SbZ → ZSa → SaM
5. Mess-Schleife: MSb → SbZ → ZSb → SbY → YSa → SaM
6. Mess-Schleife: MSa → SaY → YSa → SaX → XSb → SbM

Die Mess-Schleifen 1 bis 6 können beispielsweise bereitgestellt werden, indem die Überwachungseinrichtung 30 in jedes Überwachungspaket eine Adressinformation schreibt, die die jeweilige Mess-Schleife, die von dem jeweiligen Überwachungspaket durchlaufen werden soll, festlegt. Hierzu kann die Adressinformation beispielsweise die Paketvermittlungsknoten und die Überwachungseinrichtung 30 ansprechen, die Teil der jeweiligen Mess-Schleife sind. Die Paketvermittlungsknoten können beispielsweise über Segmente oder Label adressiert werden, während die Überwachungseinrichtung 30 alternativ auch über eine IP-Adresse adressiert werden kann. Die Adressinformation kann beispielsweise einen MPLS-Label-Stapel oder einen Segment Routing-Stapel enthalten, mit dem die beteiligten Paketvermittlungsknoten und die Überwachungseinrichtung 30 angesprochen werden können. Jede Adressinformation, die eine der Mess-Schleifen festlegt, wird in der Überwachungseinrichtung 30 konfiguriert. Hinsichtlich der Mess-Schleife 1 kann die Adressinformation beispielsweise folgenden Adress-Stapel enthalten:
Adresse zum Ansprechen des Paketvermittlungsknoten 20,
Adresse zum Ansprechen des Paketvermittlungsknoten 21,
Adresse zum Ansprechen des Paketvermittlungsknoten 20,
Adresse zum Ansprechen des Paketvermittlungsknoten 23,
Adresse zum Ansprechen des Paketvermittlungsknoten 24,
Adresse zum Ansprechen der Überwachungseinrichtung 30.

Die Mess-Schleifen 1 bis 6 werden anhand der Bezeichnungen, die die Durchlaufrichtungen in den jeweiligen Verbindungen kennzeichnen, beschrieben.

In einer Mess-Schleife durchlaufene Verbindungen werden lediglich anhand der ersten Mess-Schleife detailliert erläutert. So beginnt die erste Mess-Schleife an der Überwachungseinrichtung 30 und wird unidirektional über die Verbindung 40 zum Paketvermittlungsknoten 20 durchlaufen, was durch die Bezeichnung MSa → in Figur 1 angedeutet ist. Die erste Mess-Schleife verläuft dann über die Verbindung 61 zum Paketvermittlungsknoten 21 und wieder zurück über die Verbindung 61 zum Paketvermittlungsknoten 20. Die Verbindung 61 wird somit bidirektional von Überwachungspaketen durchlaufen. Die erste Mess-Schleife verläuft anschließend weiter vom Paketvermittlungsknoten 20 über die unidirektional durchlaufene Verbindung 64 zum Paketvermittlungsknoten 23, was durch die Bezeichnung SaZ → dargestellt ist. Weiter verläuft die erste Mess-Schleife über die unidirektional durchlaufene Verbindung 65 vom Paketvermittlungsknoten 23 zum Paketvermittlungsknoten 24. Die beiden Verbindungen 64 und 65 werden innerhalb der ersten Mess-Schleife somit unidirektional von Überwachungspaketen durchlaufen. Schließlich wird die erste Mess-Schleife über die Verbindung 41, die den Paketvermittlungsknoten 24 und die zentrale Überwachungseinrichtung 30 verbindet, geschlossen. Mit anderen Worten: Die erste Mess-Schleife umfasst die bidirektional durchlaufene Verbindung 61 sowie die beiden unidirektional durchlaufenen Verbindungen 64 (vom Paketvermittlungsknoten 20 zum Paketvermittlungsknoten 23) und 65 (vom Paketvermittlungsknoten 23 zum Paketvermittlungsknoten 24).

Die die Mess-Schleifen 2 bis 5 bildenden Verbindungen ergeben sich unmittelbar aus Fig. 1.

Hierbei fällt insbesondere auf, dass jede der sechs Verbindungen 61 bis 66 nur einmal in einer der Mess-Schleifen bidirektional von Überwachungspaketen durchlaufen wird. So wird die Verbindung 61 nur in der ersten Mess-Schleife, die Verbindung 64 nur in der zweiten Mess-Schleife, die Verbindung 66 nur in der dritten Mess-Schleife, die Verbindung 62 nur in der vierten Mess-Schleife, die Verbindung 65 nur in der fünften Mess-Schleife und die Verbindung 63 nur in der sechsten Mess-Schleife bidirektional von Überwachungspaketen durchlaufen. Das bedeutet, dass jede Mess-Schleife nur eine auf Ausfälle zu überwachende Verbindung bidirektional durchläuft. Allerdings kann eine bidirektional durchlaufene Verbindung, zum Beispiel die Verbindung 61 in der ersten Mess-Schleife, durchaus in anderen Mess-Schleifen unidirektional durchlaufen werden.

Folglich wird jede Mess-Schleife aus genau einer bidirektional von Überwachungspaketen durchlaufenen Verbindung und wenigstens zwei weiteren Verbindungen gebildet, die jeweils unidirektional von Überwachungspaketen durchlaufen werden, wobei in jeder Mess-Schleife eine andere Verbindung bidirektional durchlaufen wird.

Gemäß einer vorteilhaften Weiterbildung sind die sechs Mess-Schleifen 1 bis 6 derart festgelegt worden, dass jede der sechs Verbindungen 61 bis 66 in genau drei verschiedenen Mess-Schleifen enthalten sind, wobei dieselbe Verbindung in einer ersten Mess-Schleife bidirektional und in zwei weiteren Mess-Schleifen je einmal in jeweils gegenläufiger Richtung durchlaufen wird. Diese Bedingung wird lediglich anhand der Verbindung 61 ausführlich beschrieben. So wird die Verbindung 61 bidirektional in der Mess-Schleife 1, unidirektional vom Paketvermittlungsknoten 21 zum Paketvermittlungsknoten 20 in der Mess-Schleife 3 und in umgekehrter Richtung unidirektional vom Paketvermittlungsknoten 20 zum Paketvermittlungsknoten 21 in der Mess-Schleife 6 durchlaufen. Für die übrigen Verbindungen 62 bis 66 lässt sich diese Bedingung analog aus Fig. 1 in Verbindung mit den oben angegebenen Mess-Schleifen 2 bis 6 ablesen.

Die zentrale Überwachungseinrichtung kann beispielsweise dazu ausgebildet sein, wenigstens ein Überwachungspaket, vorzugsweise ein MPLS-Überwachungspaket mit einem MPLS-Adressstapel oder ein Segment Routing Überwachungspaket mit einem IPv6-Adressstapel für jede Mess-Schleife bereitzustellen und dieses Überwachungspaket gezielt, d.h. in Abhängigkeit von dem jeweiligen Adressstapel durch die jeweilige Mess-Schleife zu übertragen. Vorzugsweise enthält jedes Überwachungspaket neben einem Adressstapel einen Zeitstempel zur Laufzeitmessung in der Überwachungseinrichtung. Unter Ansprechen auf die empfangenen Überwachungspakete kann die zentrale Überwachungseinrichtung 30 die Laufzeit in jeder der mindestens sechs Mess-Schleifen bestimmen und in Abhängigkeit von den ermittelten Laufzeiten den aktuellen Zustand des paketvermittelnden Teilkommunikationsnetzes 50 ermitteln.

Die Überwachungseinrichtung 30 weist beispielsweise eine Speichereinrichtung 31 auf, in der Referenzlaufzeiten für jede der mindestens sechs Mess-Schleifen 1 bis 6 gespeichert sein können. Die Referenzlaufzeiten können vorab im ungestörten Betrieb des Teilkommunikationsnetzes 50 gemessen werden. Die Überwachungseinrichtung 30 weist ferner eine Steuereinheit 32 auf, die als Mikroprozessor oder Mikrokontroller ausgebildet sein kann. Die Steuereinheit 32 steuert und überwacht die Funktionen der Überwachungseinrichtung 30. Darüber hinaus kann die Überwachungseinrichtung einen Vergleicher 33 aufweisen, der, wie weiter unten noch näher ausgeführt wird, die gespeicherten Referenzlaufzeiten mit aktuell gemessenen Laufzeiten in den festgelegten Mess-Schleifen 1 bis 6 zum Ermitteln eines Laufzeitänderungsmusters vergleichen kann, aus dem wiederum der Zustand des paketvermittelnden Teilkommunikationsnetzes 50 ermittelt werden kann. Weiterhin kann die Überwachungseinrichtung 30 eine Kommunikationsschnittstelleneinrichtung 34 zum Anschließen wenigstens eines Paketvermittlungsknoten aufweisen. Im gezeigten Beispiel ist die Kommunikationsschnittstelleneinrichtung 34 zum Anschließen an die beiden Paketvermittlungsknoten 20 und 24 sowie zum Senden und Empfangen von Überwachungspaketen, insbesondere von MPLS-Überwachungspaketen oder Segment Routing Überwachungspaketen zu und von den Paketvermittlungsknoten 20 und 24 ausgebildet.

Nunmehr sei angenommen, dass die wenigstens sechs Mess-Schleifen 1 bis 6 wie oben beschrieben festgelegt bzw. bereitgestellt worden sind. Von nun an können von der zentralen Überwachungseinrichtung 30 mindestens ein Überwachungspaket für jede der Mess-Schleifen bereitgestellt und über die jeweilige Mess-Schleife übertragen werden. Hierzu können, wie bereits erwähnt, die Überwachungspakete einen Adressstapel enthalten, der festlegt, welche Verbindungen das jeweilige Überwachungspaket durchlaufen und durch welche Paketvermittlungsknoten das jeweilige Überwachungspaket weitergeleitet werden soll. Darüber hinaus enthält jedes Überwachungspaket vorzugsweise einen Zeitstempel. Unter Ansprechen auf die übertragenen Überwachungspakete wird in der Überwachungseinrichtung 30 in jeder der mindestens sechs Mess-Schleifen 1 bis 6 eine Laufzeit bestimmt bzw. gemessen, indem in der Überwachungseinrichtung 30 der Zeitstempel jedes empfangenen Überwachungspakets ausgewertet wird. Hierzu kann in der Überwachungseinrichtung 30 ein Zeitgeber zum Erzeugen des aktuellen Zeitpunktes implementiert sein. In Abhängigkeit der bestimmten Laufzeiten in den Mess-Schleifen 1 bis 6wird nunmehr der Zustand des Teilkommunikationsnetzes 50 ermittelt.

Dies ist möglich, da in Abhängigkeit des Zustandes des Teilkommunikationsnetzes 50 ein unverwechselbares Laufzeitmuster bezüglich der mindestens sechs Mess-Schleifen 1 bis 6 erzeugt wird, aus dem eindeutig auf den Zustand des Teilkommunikationsnetzes 50 geschlossen werden kann. Ein Zustand des Teilkommunikationssystems wird zum Beispiel durch den Ausfall oder die Überlastung einer bestimmten Verbindung und/oder den Ausfall oder die Überlastung der Ausgangsschnittstelle eines bestimmten Paketvermittlungsknotens definiert.

Sind in der Überwachungseinrichtung für jede der sechs Mess-Schleifen 1 bis 6 jeweils eine Referenzlaufzeit gespeichert, kann hinsichtlich jeder der sechs Mess-Schleifen 1 bis 6 die dazugehörende von der Überwachungseinrichtung 30 gemessene Laufzeit mit der dazugehörenden Referenzzeit zur Ermittlung einer Laufzeitänderung verglichen werden. So wird beispielsweise die Referenzzeit der ersten Mess-Schleife mit der in der ersten Mess-Schleife mittels eines Überwachungspakets ermittelte Laufzeit verglichen usw. Auf diese Weise kann für die erste Mess-Schleife als Laufzeitänderung die Differenz zwischen der gespeicherten Referenzlaufzeit und der gemessenen Laufzeit ermittelt werden. In Abhängigkeit von den so ermittelten Laufzeitänderungen, die wiederum ein für einen Zustand des Teilkommunikationsnetzes 50 charakteristisches Laufzeitänderungsmuster ergeben, kann dann in eindeutiger Weise dieser Zustand ermittelt werden.

Anhand der ermittelten Laufzeitänderungs-Muster können insbesondere ein Ausfall oder eine Überlastung einer der Verbindungen 1 bis 6 und/oder ein Ausfall oder eine Überlastung der mit einer der Verbindungen verbundene Ausgangsschnittstelle eines der Paketvermittlungsknoten 20 bis 24 eindeutig ermittelt werden.

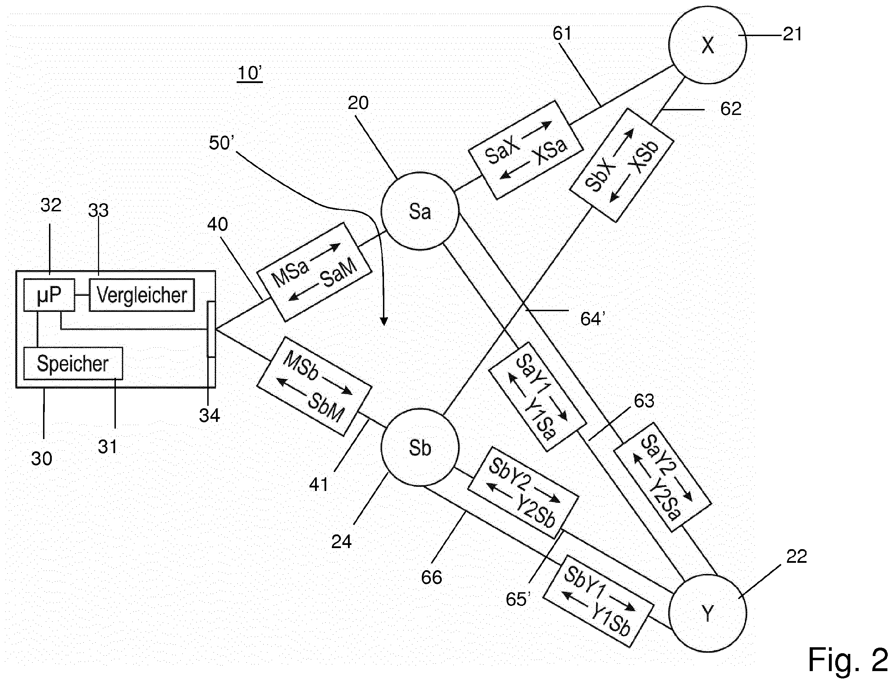

Figur 2 zeigt ein weiteres beispielhaftes Kommunikationssystem 10', mit einem beispielhaften paketvermittelnden Teilkommunikationsnetz 50'. Dieses Teilkommunikationsnetz 50' unterscheidet sich von dem in Figur 1 gezeigten Teilkommunikationsnetz 50 im Wesentlichen dadurch, dass der Paketvermittlungsknoten 23 und die Verbindungen 64 und 65 entfernt worden sind. Um dennoch die für die zentrale Ermittlung eines Zustandes des paketvermittelnden Teil-Kommunikationsnetzes 50' erforderliche Mindestanzahl von sechs Verbindungen einrichten zu können, werden beispielsweise zwischen den Paketvermittlungsknoten 20 und 22 und den Paketvermittlungsknoten 22 und 24 jeweils zwei Verbindungen 63 und 64' bzw. 65' und 66 eingerichtet.

Bei der Einrichtung der Mess-Schleifen ist wiederum zwingend erforderlich, dass jede Mess-Schleife nur eine bidirektional von Überwachungspaketen durchlaufene Verbindung und mindestens zwei weitere, unidirektional durchlaufene Verbindungen aufweist, wobei eine Verbindung immer nur hinsichtlich einer einzigen Mess-Schleife bidirektional durchlaufen wird und genau zwei weitere male in jeweils gegenläufiger Richtung unidirektional. Die entsprechenden Mess-Schleifen ergeben sich beispielsweise wie folgt:
1. Mess-Schleife: MSa → SaX → XSa → SaY2 → Y1Sb → SbM
2. Mess-Schleife: MSa → SaY1 → Y2Sa → SaY2 → Y2Sb → SbM
3. Mess-Schleife: MSb → SbY1 → Y1Sb → SbX → XSa → SaM
4. Mess-Schleife: MSb → SbX → XSb → SbY2 → Y1Sa → SaM
5. Mess-Schleife: MSb → SbY1 → Y2Sb → SbY2 → Y2Sa → SaM
6. Mess-Schleife: MSa → SaY1 → Y1Sa → SaX → XSb → SbM

Wie ein Vergleich der beiden Kommunikationssysteme 10 und 10' zeigt, ist für die zentrale Ermittlung des Zustandes des paketvermittelnden Teilkommunikationsnetzes 50 oder 50' nicht die Anzahl der durchlaufenden Paketvermittlungsknoten 20 bis 24 bzw. 20-22 und 24, sondern die Anzahl der Verbindungen, nämlich mindestens sechs Verbindungen, relevant.

Die Funktionsweise des Kommunikationssystems 10' entspricht im Wesentlichen der Funktionsweise des Kommunikationssystems 10, so dass eine detaillierte Erläuterung des Kommunikationssystems 10' nicht erforderlich ist.

Für den Fall, dass die Überwachungseinrichtung 30 nicht unmittelbar an die beiden Paketvermittlungsknoten 20 und 24 angeschaltet ist, sondern, wie in Figur 1 und 2 gezeigt, über Verbindungen 40 und 41, muss für eine korrekte Erfassung eines Laufzeitänderungs-Musters jeweils auch die Laufzeit von der Überwachungseinrichtung 30 zu den beiden Paketvermittlungsknoten 20 und 24 gemessen werden. Diese Laufzeiten müssen dann gegebenenfalls bei der Messung der Laufzeit in jeder der sechs Mess-Schleifen abgezogen werden, und zwar in Abhängigkeit davon, ob die jeweilige Mess-Schleife über beiden oder nur eine der Verbindungen 40 und 41 läuft.

Die Funktionsweise des in Figur 1 gezeigten paketvermittelnden Kommunikationssystems 10 wird nachfolgend anhand zweier Beispiele erläutert.

Zunächst sei angenommen, dass die Laufzeiten der sechs Verbindungen 61 bis 66 bei einem ungestörten Betrieb des paketvermittelnden Teilkommunikationsnetzes 50 in jeder Durchlaufrichtung bekannt sind. Angenommen sei ebenfalls, dass die Laufzeiten in beiden Richtungen einer jeweiligen Verbindung gleich seien. Im ungestörten Betrieb ergeben sich somit folgende Laufzeiten für die sechs Verbindungen 61 bis 66:
Laufzeit Verbindung SaX = 1,1 ms = Laufzeit Verbindung XSa.
Laufzeit Verbindung SbX = 2,7 ms = Laufzeit Verbindung XSb
Laufzeit Verbindung SaY = 1,5 ms = Laufzeit Verbindung YSa
Laufzeit Verbindung SbY = 2,2 ms = Laufzeit Verbindung YSb
Laufzeit Verbindung SaZ = 2,4 ms = Laufzeit Verbindung ZSa
Laufzeit Verbindung SbZ = 1,4 ms = Laufzeit Verbindung ZSb.

Zu beachten ist, dass die unidirektionalen Laufzeiten im Normalfall beispielsweise für die unidirektionale Verbindung SaX gleich der Laufzeit für die unidirektionale Verbindung XSa ist. Im Falle einer Überlast gilt das jedoch nur dann, wenn beide Schnittstellen am Ausgang der jeweiligen Paketvermittlungsknoten 20 und 21 ohne Puffer konfiguriert werden.

Angenommen sei, dass in bekannter Weise in jedem Paketvermittlungsknoten ein Puffer für zu sendende Überwachungspakete eingerichtet ist. Üblicherweise hat ein solcher Puffer eine Tiefe, die für dieses Beispiel in der Einheit ms angegeben wird. Für zu sendende Überwachungspakete sei beispielsweise in jedem Paketvermittlungsknoten 20 bis 24 für jede seiner unidirektionalen Verbindungen einheitlich ein Puffer von jeweils 100ms eingerichtet.

Mit den oben angegebenen unidirektionalen Verbindungs-Laufzeiten ergeben sich für die Mess-Schleifen 1 bis 6 folgende Referenzlaufzeiten für ein Überwachungspaket zum Durchlaufen der jeweiligen Mess-Schleife, solange im Teilkommunikationsnetz 50 weder Überlast noch Ausfälle auftreten:
Mess-Schleife 1: Laufzeit = 6,0 ms
Mess-Schleife 2: Laufzeit = 8,5 ms
Mess-Schleife 3: Laufzeit = 8,2 ms
Mess-Schleife 4: Laufzeit = 9,2 ms
Mess-Schleife 5: Laufzeit = 6,5 ms
Mess-Schleife 6: Laufzeit = 6,8 ms.

Diese Laufzeiten können im Unterschied zu den Verbindungs-Laufzeiten auch als Mess-Schleifen-Laufzeiten bezeichnet und als Referenzlaufzeiten der Mess-Schleifen in der Speichereinrichtung 31 der zentralen Überwachungseinrichtung 30 gespeichert werden.

Es wird nun ein Zustand des Teilkommunikationsnetzes 50 betrachtet, bei dem die Verbindung 61, die unidirektional vom Paketvermittlungsknoten 20 zum Paketvermittlungsknoten 21 durchlaufen wird, überlastet sei. Dies bedeutet, dass der Puffer der Ausgangsschnittstelle des Paketvermittlungsknotens 20 bis zum Überlaufen gefüllt ist.

Weiterhin sei angenommen, dass mindestens ein Überwachungspaket von der Überwachungseinrichtung 30 durch jede der sechs Mess-Schleifen übertragen wird und die in der Überwachungseinrichtung 30 empfangenen Überwachungspakete zur Ermittlung der Mess-Schleifen-Laufzeiten in jeder Mess-Schleife ausgewertet werden.

In dem angenommenen Zustand des Teilkommunikationsnetzes 50 ermittelt die Überwachungseinrichtung 30 ein Verhaltensmuster, gemäß dem die Mess-Schleifen-Laufzeiten der Mess-Schleifen 1, 3, 4 und 5 unverändert sind. Die Mess-Schleifen-Laufzeit der Mess-Schleife 2 hat sich jedoch in Folge der Überlastung der Verbindung 63, und zwar an der Ausgangsschnittstelle des Paketvermittlungsknoten 20 zum Paketvermittlungsknoten 23, beispielsweise auf etwa 108,5ms erhöht, während sich die Mess-Schleifen-Laufzeit der Mess-Schleife 6 beispielsweise auf etwa 106,8ms erhöht hat. Das bedeutet, dass die Überwachungseinrichtung 30 hinsichtlich der Mess-Schleifen 1, 3, 4 und 5 jeweils eine Laufzeitänderung von im Wesentlichen Null und hinsichtlich der Mess-Schleifen 2 und 6 jeweils eine Laufzeitänderung von etwa 100ms ermittelt hat. Eine Laufzeitänderung kann die Überwachungseinrichtung 30 beispielsweise aus der Differenz zwischen der bezüglich einer Mess-Schleife gemessenen Laufzeit und der dazugehörenden Referenzlaufzeit ermitteln. Aus dem ermittelten Verhaltensmuster, nach dem die Laufzeitänderung in den Mess-Schleifen 1, 3, 4 und im Wesentlichen Null und die Laufzeitänderungen in den Mess-Schleifen 2 und 6 im Wesentlichen gleich hoch und größer als Null sind, kann die Überwachungseinrichtung 30 eindeutig erkennen, dass die Verbindung 63 überlastet und der Puffer der Ausgangsschnittstelle des Paketvermittlungsknoten 20 bis zum Überlaufen gefüllt ist. Angemerkt sei an dieser Stelle, dass jeder Paketvermittlungsknoten wenigstens eine Eingangs- und wenigstens eine Ausgangsschnittstelle zum Anschließen an eine der Verbindungen 61 bis 66 aufweist.

In ähnlicher Weise kann mit Hilfe der sechs eingerichteten Mess-Schleifen 1 bis 6 ein eindeutiges Laufzeitänderungs-Muster von der Überwachungseinrichtung 30 ermittelt werden, welches darauf hinweist, dass die Verbindung 63, die unidirektional vom Paketvermittlungsknoten 22 zum Paketvermittlungsknoten 20 durchlaufen wird, überlastet ist. In diesem Zustand ist der Puffer des Paketvermittlungsknotens 22 bis zum Überlaufen gefüllt.

In dem zuletzt angenommenen Zustand des Teilkommunikationsnetzes 50 ermittelt die Überwachungseinrichtung 30 ein Verhaltensmuster, gemäß dem die Mess-Schleifen-Laufzeiten der Mess-Schleifen 1, 2, 3 und 4 unverändert sind. Die Mess-Schleifen-Laufzeit der Mess-Schleife 5 hat sich jedoch in Folge der Überlastung der Verbindung 63 (Richtung vom Paketvermittlungsknoten 22 zum Paketvermittlungsknoten 20) beispielsweise auf etwa 106,5ms erhöht, während sich die Mess-Schleifen-Laufzeit der Mess-Schleife 6 beispielsweise auf etwa 106,8ms erhöht hat. Das bedeutet, dass die Überwachungseinrichtung 30 hinsichtlich der Mess-Schleifen 1, 2, 3 und 4 jeweils eine Laufzeitänderung von im Wesentlichen Null und hinsichtlich der Mess-Schleifen 5 und 6 jeweils eine Laufzeitänderung von etwa 100ms ermittelt hat. Eine Laufzeitänderung kann die Überwachungseinrichtung 30 beispielsweise wiederum aus der Differenz zwischen der bezüglich einer Mess-Schleife gemessenen Laufzeit und der dazugehörenden Referenzlaufzeit ermitteln. Aus dem ermittelten Verhaltensmuster, nach dem die Laufzeitänderung in den Mess-Schleifen 1 bis 4 im Wesentlichen Null und die Laufzeitänderungen in den Mess-Schleifen 2 und im Wesentlichen gleich hoch und größer als Null sind, kann die Überwachungseinrichtung 30 eindeutig erkennen, dass die Verbindung 63 überlastet und der Puffer der mit der Verbindung 63 verbundenen Ausgangsschnittstelle des Paketvermittlungsknoten 22 bis zum Überlaufen gefüllt ist.

Die beiden erläuterten Beispiele zeigen zwei unterschiedliche Laufzeitänderungs- bzw. Fehlermuster, die jeweils eindeutig einem Zustand des Teilkommunikationsnetzes 50 zugeordnet sind.

Entsprechend eindeutig erkennbare Laufzeitveränderungs-Muster ergeben sich für alle anderen Überlast-Situationen des überwachten Teilkommunikationsnetzes 10.

Bei einem dritten Beispiel sei angenommen, dass der Paketvermittlungsknoten 21 vollständig ausfalle. Eine Überlast tritt in diesem Fall nicht ein, da der Paketvermittlungsknoten 21 sozusagen verschwunden ist. Dadurch werden die Überwachungspakete aller Mess-Schleifen, die den Paketvermittlungsknoten 21 durchlaufen würden, verworfen.

Angenommen sei, dass es sich bei dem paketvermittelnden Teilkommunikationsnetz 50 um ein Segment Routing- oder MPLS-basiertes Teil-Kommunikationsnetz handelt. In diesem Fall sind die Paketvermittlungsknoten 20 bis 24 und gegebenenfalls die Überwachungseinrichtung 30 dazu ausgebildet, den ausgefallenen Paketvermittlungsknoten 21 aus den Routing-Tabellen der verbleibenden Paketvermittlungsknoten zu entfernen. Das führt dazu, dass die Laufzeit von Überwachungspaketen durch die Mess-Schleifen 2 und 5 unverändert bleiben, während Überwachungspakete durch die Mess-Schleifen 1, 3, 4 und 6 verworfen werden, sobald der Paktvermittlungsknoten 21 vollständig ausgefallen ist. Mit anderen Worten: Bei Ausfall des Paketvermittlungsknoten 21 kann die Überwachungseinrichtung 30 zu den Mess-Schleifen 1, 3, 4, 6 keine Laufzeit mehr messen. Aus diesem Verhaltensmuster kann die Überwachungseinrichtung 30 eindeutig ermitteln, dass der Paketvermittlungsknoten 21 vollständig ausgefallen ist.

Wenn anstelle des Paketvermittlungsknoten 21 der Paketvermittlungsknoten 22 vollständig ausfällt, bleiben die Laufzeiten entlang der Mess-Schleifen 1 und 4 unverändert, während Pakete auf den Mess-Schleifen 2, 3, 5 und 6 verworfen werden, sobald der Paketvermittlungsknoten 22 ausgefallen ist. Aus diesem Verhaltensmuster kann die Überwachungseinrichtung 30 eindeutig ermitteln, dass der Paketvermittlungsknoten 22 vollständig ausgefallen ist.

Die Beispiele zeigen, dass sich in Abhängigkeit der Zustände des paketvermittelnden Teilkommunikationsnetzes 30 eindeutig unterscheidbare Laufzeitänderungs-Muster ergeben, die von der Überwachungseinrichtung 30 erfasst werden, wenn die Laufzeiten der Mess-Schleifen 1 bis 6 gemeinsam in der Überwachungseinrichtung 30 ausgewertet werden. Aus den Laufzeit-Änderungsmustern kann dann in der Überwachungseinrichtung 30 der dazugehörende Zustand des Teilkommunikationssystems ermittelt werden.

Insbesondere kann ermittelt werden, ob und wenn ja welcher Paketvermittlungsknoten überlastet oder ausgefallen ist und/oder welche Verbindung überlastet oder ausgefallen ist.

Wenn eine Verbindung und/oder ein Paketvermittlungsknoten ausgefallen ist, kann die Überwachungseinrichtung 30 erkennen, ob Überwachungspakete auf anderen Verbindungen transportiert werden. Hierzu ist anzumerken, dass bei dem hier beispielhaft betrachteten IP/MPLS Routing nach Ausfall einer Verbindung die Paketvermittlungsknoten 20 bis 24 und gegebenenfalls die Überwachungseinrichtung 30 eigenständig eine oder mehrere der Mess-Schleifen ändern können, solange der Ziel-Paketvermittlungsknoten erreichbar bleibt. Da in dem in Figur 1 und 2 gezeigten Teil-Kommunikationsnetz 50 bzw. 50' zu jedem Paketvermittlungsknoten mindestens zwei Verbindungen existieren, kann bei Ausfall einer Verbindung die betroffenen Mess-Schleifen geändert werden. Fällt eine der Verbindungen aus, bleibt die andere noch bestehen. Ein solches IP/MPLS Routing ist, wie bereits erwähnt, aus der WO 2012/110011 A2 bekannt.

## Patentansprüche

1. Verfahren zum zentralen Ermitteln eines Zustands eines paketvermittelnden Teilkommunikationsnetzes (50; 50'), welches mindestens sechs Verbindungen (61-66; 61-63, 64', 65', 66), die jeweils zwei Paketvermittlungsknoten (20-25) unmittelbar miteinander verbinden, und eine wenigstens einer der Paketvermittlungsknoten zugeordnete Überwachungseinrichtung (30) aufweist, mit folgenden Verfahrensschritten:
a) Bereitstellen von mindestens sechs verschiedenen Mess-Schleifen, die jeweils an der Überwachungseinrichtung (30) beginnen und enden, derart, dass jede Mess-Schleife genau eine andere der mindestens sechs Verbindungen, die bidirektional von Überwachungspaketen durchlaufen wird, und wenigstens zwei weitere der wenigstens sechs Verbindungen, die jeweils unidirektional von Überwachungspaketen durchlaufen werden, aufweist;
b) Bereitstellen, von der Überwachungseinrichtung (30), für jede der mindestens sechs Mess-Schleifen wenigstens eines Überwachungspakets, das gezielt über die Verbindungen der jeweiligen Mess-Schleife der mindestens sechs Mess-Schleifen übertragen wird;
c) Bestimmen, in der Überwachungseinrichtung (30), unter Ansprechen auf die in Schritt b) übertragenen Überwachungspakete einer Laufzeit in jeder der mindestens sechs Mess-Schleifen;
d) Ermitteln des Zustands des paketvermittelnden Teilkommunikationsnetzes (50; 50') in Abhängigkeit von den in Schritt c) ermittelten Laufzeiten.

2. Verfahren nach Anspruch 1,
**dadurch gekennzeichnet, dass**
Schritt c) folgende Schritte aufweist:
Speichern jeweils einer Referenzlaufzeit für jede der mindestens sechs Mess-Schleifen;
Vergleichen jeder in Schritt c) bestimmten Laufzeit mit der jeweils dazugehörenden Referenzlaufzeit zur Ermittlung einer Laufzeitänderung in jeder der Mess-Schleifen; und dass
in Schritt d) in Abhängigkeit von den ermittelten Laufzeitänderungen der Zustand des paketvermittelnden Teilkommunikationsnetzes ermittelt wird.

3. Verfahren nach Anspruch 1 oder 2,
**dadurch gekennzeichnet, dass**
die mindestens sechs Mess-Schleifen unter Ausführung eines Segment Routing oder eines MPLS Routingverfahrens bereitgestellt werden, und dass von der Überwachungseinrichtung (30) Überwachungspakete mit Adressinformationen zur Übertragung über die mindestens sechs Mess-Schleifen bereitgestellt werden.

4. Verfahren nach einem der vorstehenden Ansprüche;
**dadurch gekennzeichnet, dass**
in Schritt d) ein Ausfall oder eine Überlastung einer bestimmten der mindestens sechs Verbindungen und/oder ein Ausfall oder eine Überlastung eines bestimmten der Paketvermittlungsknoten ermittelt werden kann.

5. Verfahren nach einem der vorstehenden Ansprüche 1 bis 4,
**dadurch gekennzeichnet, dass**
jede der mindestens sechs Verbindungen in genau einer der Mess-Schleifen bidirektional, in genau einer weiteren der Messschleifen unidirektional in einer ersten Richtung und in genau einer weiteren der Mess-Schleifen unidirektional in einer zweiten Richtung durchlaufen wird.

6. Kommunikationssystem (10; 10') zum zentralen Ermitteln eines Zustands eines paketvermittelnden Teilkommunikationsnetzes (50; 50') umfassend:
- wenigstens ein paketvermittelndes Teilkommunikationsnetz (50; 50'), welches mindestens sechs Verbindungen (61-66; 61-63, 64', 65'; 66), die jeweils zwei Paketvermittlungsknoten (20-24) unmittelbar miteinander verbinden, aufweist, und
- eine wenigstens einer der Paketvermittlungsknoten (20, 24) zugeordnete Überwachungseinrichtung (30), die dazu ausgebildet ist,
a) Überwachungspakete zur gezielten Übertragung über mindestens sechs Mess-Schleifen bereitzustellen, wobei jede der sechs verschiedenen Mess-Schleifen jeweils an der Überwachungseinrichtung (30) beginnt und endet, und wobei jede der sechs verschiedenen Mess-Schleifen genau eine andere der mindestens sechs Verbindungen zum bidirektional Durchlaufen von Überwachungspaketen und wenigstens zwei weitere der wenigstens sechs Verbindungen zum jeweiligen unidirektionalen Durchlaufen von Überwachungspaketen aufweist,
b) unter Ansprechen auf die übertragenen Überwachungspakete eine Laufzeit in jeder der mindestens sechs Mess-Schleifen zu bestimmen, und
c) in Abhängigkeit von den in b) bestimmten Laufzeiten den Zustand des paketvermittelnden Teilkommunikationsnetzes zu ermitteln.

7. Kommunikationssystem nach Anspruch 6,
**dadurch gekennzeichnet, dass**
die Überwachungseinrichtung (30) einen Speicher (31) zum Ablegen jeweils einer Referenzlaufzeit für jede der mindestens sechs Mess-Schleifen aufweist, und dass die Überwachungseinrichtung (30) dazu ausgebildet ist, jede in Merkmal b) bestimmte Laufzeit mit der jeweils dazugehörenden Referenzzeit zur Ermittlung einer Laufzeitänderung für jede der Mess-Schleifen zu vergleichen und in Abhängigkeit von den ermittelten Laufzeitänderungen den Zustand des paketvermittelnden Teilkommunikationsnetzes zu ermitteln.

8. Kommunikationssystem nach Anspruch 6 oder 7,
**dadurch gekennzeichnet, dass**
die Überwachungseinrichtung (30) dazu ausgebildet sind, zum Bereitstellen der mindestens sechs Mess-Schleifen ein Segment Routing oder ein MPLS Routingverfahren auszuführen.

9. Kommunikationssystem nach einem Ansprüche 6 bis 8;
**dadurch gekennzeichnet, dass**
die Überwachungseinrichtung zum Ermitteln eines Ausfalls oder einer Überlastung einer bestimmten der mindestens sechs Verbindungen (61-66; 61-63, 64', 65'; 66) und/oder eines bestimmten der
Paketvermittlungsknoten (20-24) ausgebildet ist.

10. Kommunikationssystem nach einem der Ansprüche 6 bis 9, **dadurch gekennzeichnet, dass**
das Durchlaufen jeder der mindestens sechs Verbindungen in genau einer der Mess-Schleifen bidirektional, in genau einer weiteren der Messschleifen unidirektional in einer ersten Richtung und in genau einer weiteren der Mess-Schleifen unidirektional in einer zweiten Richtung erfolgt.

## Claims

1. A method for centrally determining a state of a packet-switching communication subnetwork (50; 50') which comprises at least six links (61 - 66; 61 - 63, 64'. 65', 66) each one connecting two respective packet switching nodes (20 - 25) directly to each other, and a monitoring device (30) associated with at least one of the packet switching nodes, the method comprising the steps of:
a) providing at least six different measurement loops, each one starting and ending at the monitoring device (30), such that each measurement loop comprises exactly a single different one of the at least six links, through which monitoring packets are passed bi-directionally, and at least two further of the at least six links, through which monitoring packets are passed unidirectionally;
b) providing, by the monitoring device (30), at least one monitoring packet for each of the at least six measurement loops, which is selectively transmitted over the links of the respective measurement loop of the at least six measurement loops;
c) determining, in the monitoring device (30), a propagating time in each of the at least six measurement loops in response to the monitoring packets transmitted in step b);
d) determining the state of the packet-switching communication subnetwork (50; 50') as a function of the propagating times determined in step c).

2. The method according to claim 1, **characterized in that**
step c) comprises the steps of:
storing a respective reference propagating time for each of the at least six measurement loops;
comparing each propagating time determined in step c) with the respectively associated reference propagating time for determining a change in the propagating time in each of the measurement loops; and that
in step d), the state of the packet-switching communication subnetwork is determined as a function of the determined changes in the propagating time.

3. The method according to claim 1 or 2, **characterized in that**
the at least six measurement loops are provided by executing a segment routing or MPLS routing technique, and that the monitoring device (30) provides monitoring packets with address information for being transmitted over the at least six measurement loops.

4. The method according to any one of the preceding claims; **characterized in that** step d) allows to determine a failure or an overload of a particular one of the at least six links and/or a failure or an overload of a particular one of the packet switching nodes.

5. The method according to any one of the preceding claims 1 to 4, **characterized in that** the passing through each of the at least six links is effected bidirectionally in exactly one of the measurement loops, unidirectionally in a first direction in exactly one further of the measurement loops, and unidirectionally in a second direction in exactly one further of the measurement loops.

6. A communication system (10; 10') for centrally determining a state of a packet-switching communication subnetwork (50; 50'), comprising:
- at least one packet-switching communication subnetwork (50; 50') comprising at least six links (61 - 66; 61 - 63, 64', 65'; 66) each one connecting two respective packet switching nodes (20 - 24) directly to each other; and
- a monitoring device (30) associated with at least one of the packet switching nodes (20, 24) and being adapted
a) to provide monitoring packets for selective transmission over at least six measurement loops, wherein each of the six different measurement loops starts and ends at the monitoring device (30), and wherein each of the six different measurement loops comprises exactly a single different one of the at least six links for passing monitoring packets bi-directionally, and at least two further links of the at least six links for passing monitoring packets unidirectionally;
b) to determine a propagating time in each of the at least six measurement loops in response to the transmitted monitoring packets; and
c) to determine the state of the packet-switching communication subnetwork as a function of the propagating times determined in b).

7. The communication system according to claim 6, **characterized in that** the monitoring device (30) has a memory (31) for storing a respective reference propagating time for each of the at least six measurement loops; and **in that** the monitoring device (30) is adapted to compare each propagating time determined in feature b) with the respectively associated reference time for determining a change in the propagating time in each of the measurement loops, and to determine the state of the packet-switching communication subnetwork as a function of the determined changes in the propagating time.

8. The communication system according to claim 6 or 7, **characterized in that** the monitoring device (30) is adapted to execute a segment routing or MPLS routing technique for providing the at least six measurement loops,

9. The communication system according to any one of claims 6 to 8, **characterized in that** the monitoring device is adapted to detect a failure or an overload of a particular one of the at least six links (61 - 66; 61 - 63, 64', 65'; 66) and/or of a particular one of the packet switching nodes (20 - 24)

10. The communication system according to any one of claims 6 to 9, **characterized in that** the passing over each of the at least six links occurs bidirectionally in exactly one of the measurement loops, unidirectionally in a first direction in exactly one further of the measurement loops, and unidirectionally in a second direction in exactly one further of the measurement loops.

## Revendications

1. Procédé de détermination centrale d'un état d'un sous-réseau de communication à commutation par paquets (50 ; 50'), lequel présente au moins six liaisons (61-66 ; 61-63 ; 64', 65', 66), qui relient respectivement deux noeuds de commutation par paquets (20-25) directement l'un à l'autre, et un dispositif de surveillance (30) associé au moins à l'un des noeuds de commutation par paquets, comprenant les étapes de procédé suivantes consistant à
a) fournir au moins six boucles de mesure différentes, qui commencent et terminent chacune au niveau du dispositif de surveillance (30), de telle sorte que chaque boucle de mesure présente précisément une autre des au moins six liaisons, qui est parcourue de façon bidirectionnelle par des paquets de surveillance, et au moins deux autres des au moins six liaisons, qui sont parcourues chacune de façon unidirectionnelle par des paquets de surveillance ;
b) fournir, de la part du dispositif de surveillance (30), pour chacune des au moins six boucles de mesure, au moins un paquet de surveillance, qui est transmis de manière précise par l'intermédiaire des liaisons à la boucle de mesure respective parmi les au moins six boucles de mesure ;
c) définir, dans le dispositif de surveillance (30), en réponse aux paquets de surveillance transmis à l'étape b), un temps de parcours dans chacune des au moins six boucles de mesure ;
d) déterminer l'état du sous-réseau de communication à commutation par paquets (50 ; 50') en fonction des temps de parcours déterminés à l'étape c).

2. Procédé selon la revendication 1, **caractérisé en ce que**
l'étape c) présente les étapes suivantes consistant à :
mettre en mémoire respectivement un temps de parcours de référence pour chacune des au moins six boucles de mesure ;
comparer chaque temps de parcours défini à l'étape c) au temps de parcours de référence respectivement correspondant pour la détermination d'une modification de temps de parcours dans chacune des boucles de mesure ; et **en ce que**
à l'étape d) l'état du sous-réseau de communication à commutation par paquets est déterminé en fonction des modifications de temps de parcours déterminées.

3. Procédé selon la revendication 1 ou 2, **caractérisé en ce que**
les au moins six boucles de mesure sont fournies par réalisation d'un routage segmenté ou d'un procédé de routage à commutation multi-protocole par étiquette, et **en ce que**
des paquets de surveillance pourvus d'informations d'adresse à transmettre par l'intermédiaire des au moins six boucles de mesure sont fournis par le dispositif de surveillance (30).

4. Procédé selon l'une quelconque des revendications précédentes, **caractérisé en ce que**
à l'étape d), une défaillance ou un encombrement d'une liaison définie parmi les au moins six liaisons et/ou une défaillance ou un encombrement d'un noeud défini parmi les noeuds de commutation par paquets peuvent être déterminés.

5. Procédé selon l'une quelconque des revendications 1 à 4, **caractérisé en ce que**
chacune des au moins six liaisons est parcourue dans précisément une des boucles de mesure de façon bidirectionnelle, dans précisément une autre des boucles de mesure de façon unidirectionnelle dans une première direction et dans précisément une autre des boucles de mesure de façon unidirectionnelle dans une deuxième direction.

6. Système de communication (10 ; 10') pour la détermination centrale d'un état d'un sous-réseau de communication à commutation par paquets (50 ; 50') comportant :
- au moins un sous-réseau de communication à commutation par paquets (50 ; 50'), lequel présente au moins six liaisons (61-66 ; 61-63 ; 64', 65', 66), qui relient respectivement deux noeuds de commutation par paquets (20-24) directement l'un à l'autre, et
- un dispositif de surveillance (30) qui est associé au moins à l'un des noeuds de commutation par paquets (20, 24) et qui est conçu pour
a) fournir des paquets de surveillance à transmettre de manière précise par l'intermédiaire d'au moins six boucles de mesure, où chacune des six boucles de mesure différentes commence et termine respectivement au niveau du dispositif de surveillance (30), et où chacune des six boucles de mesure différentes présente précisément une autre des au moins six liaisons destinée à être parcourue de façon bidirectionnelle par des paquets de surveillance et au moins deux autres des au moins six liaisons destinées à être parcourues respectivement de façon unidirectionnelle par des paquets de surveillance ;
b) définir, en réponse aux paquets de surveillance transmis, un temps de parcours dans chacune des au moins six boucles de mesure, et
c) déterminer l'état du sous-réseau de communication à commutation par paquets en fonction des temps de parcours définis en b).

7. Système de communication selon la revendication 6, **caractérisé en ce que**
le dispositif de surveillance (30) présente une mémoire (31) pour la mise en mémoire de respectivement un temps de parcours de référence pour chacune des au moins six boucles de mesure, et **en ce que**
le dispositif de surveillance (30) est conçu pour comparer chaque temps de parcours défini dans la caractéristique b) au temps de référence respectivement correspondant pour la détermination d'une modification de temps de parcours pour chacune des boucles de mesure et, en fonction des modifications de temps de parcours déterminées, pour déterminer l'état du sous-réseau de communication à commutation par paquets.

8. Système de communication selon la revendication 6 ou 7, **caractérisé en ce que**
le dispositif de surveillance (30) est conçu pour réaliser un routage segmenté ou un procédé de routage à commutation multi-protocole par étiquette pour fournir les au moins six boucles de mesure.

9. Système de communication selon l'une quelconque des revendications 6 à 8, **caractérisé en ce que**
le dispositif de surveillance est conçu pour déterminer une défaillance ou un encombrement d'une liaison définie parmi les au moins six liaisons (61-66 ; 61-63 ; 64', 65', 66) et/ou d'un noeud défini parmi les noeuds de commutation par paquets (20-24).

10. Système de communication selon l'une quelconque des revendications 6 à 9, **caractérisé en ce que**
chacune des au moins six liaisons est parcourue dans précisément une des boucles de mesure de façon bidirectionnelle, dans précisément une autre des boucles de mesure de façon unidirectionnelle dans une première direction et dans précisément une autre des boucles de mesure de façon unidirectionnelle dans une deuxième direction.
